# EUROPÄISCHE PATENTSCHRIFT

(11) **EP 2 602 959 B1**
(45) Veröffentlichungstag und Bekanntmachung des Hinweises auf die Patenterteilung: **04.06.2014**
(21) Anmeldenummer: 11009629.4
(22) Anmeldetag: 06.12.2011
(51) Int. Cl.: H04L 12/40

(54) **Busknoten und Steuerungssystem**
Bus node and control system
Noeud de bus et système de commande

(43) Veröffentlichungstag der Anmeldung: 12.06.2013
(73) Patentinhaber: FESTO AG & Co. KG, 73734 Esslingen (DE)
(72) Erfinder: Siedler, Alois Andreas, 71638 Ludwigsburg (DE); Vuksanovic, Hrvoje, 78532 Tuttlingen (DE)
(74) Vertreter: Kocher, Mark Werner

(56) Entgegenhaltungen:
- EP-A2- 1 835 368
- US-A1- 2009 024 780
- US-B1- 7 835 380

## Beschreibung

Die Erfindung betrifft einen Busknoten zur elektrischen Kopplung eines übergeordneten Bussystems, insbesondere eines Feldbussystems, mit einem zur Ansteuerung einer Funktionsmodulanordnung ausgebildeten internen Bussystem; mit einer elektronischen Schaltung zur Umsetzung von Signalen, insbesondere Steuersignalen und/oder Sensorsignalen, zwischen einem Busprotokoll des übergeordneten Bussystems und einem Busprotokoll des internen Bussystems, wobei die elektronische Schaltung eine erste Busschnittstelle mit zugeordnetem ersten Steckverbinder zur Kopplung mit dem übergeordneten Bussystem und eine zweite Busschnittstelle mit zugeordnetem zweiten Steckverbinder zur Kopplung mit dem internen Bussystem aufweist. Ferner betrifft die Erfindung ein Steuerungssystem, bei dem Gebrauch von einem derartigen Busknoten gemacht wird.

Aus der EP 1 835 368 A2 ist eine programmierbare Steuereinrichtung mit einer zentralen Prozessoreinheit (CPU) und einer mit der zentralen Prozessoreinheit gekoppelten Kommunikationseinheit bekannt, wobei eine interne Kommunikation zwischen der zentralen Prozessoreinheit und der Kommunikationseinheit mittels eines internen Bussystems vorgesehen ist. Sowohl die zentrale Prozessoreinheit als auch die Kommunikationseinheit stellen ein TCP/IP-Protokoll bereit. Der interne Bus ist mit einer Internet-Schicht der zentralen Prozessoreinheit und mit einer Ethernet-Schicht der Kommunikationseinheit gekoppelt, wobei die Internet-Schicht der zentralen Prozessoreinheit eingehende Daten zu wenigstens einer Ethernet-Schicht der zentralen Prozessoreinheit oder des internen Busses leitet und der Ethernet-Treiber der Kommunikationseinheit eine Schaltfunktion aufweist, die eintreffende Daten zu wenigstens einer Internet-Schicht des internen Busses oder der Kommunikationseinheit leitet.

Aus der DE 10 2009 033 691 B3 ist eine Vorrichtung zur Übertragung von Daten zwischen einem seriellen Datenbus und Arbeitsmodulen bekannt, wobei der Datenbus an einen Busknoten in einem Busmodul angeschlossen ist. Das Busmodul besitzt wenigstens zwei serielle Kommunikationsanschlüsse, die mit Ports eines mit dem Busknoten verbundenen oder in ihm integrierten Hub verbunden sind. Die Kommunikationsanschlüsse sind zum Anschluss der Arbeitsmodule und zur Spannungsversorgung derselben ausgebildet, wobei wenigstens eines der Arbeitsmodule als Aktor- und/oder E/A-Modul ausgebildet ist. Dieses besitzt einen Seriell-Parallel-Wandler zum parallelen Anschluss von Aktoren und/oder E/A-Schnittstellen, die das jeweilige Arbeitsmodul aufweist oder die mit ihm verbunden sind.

Aus der EP 1 221 741 A2 ist ein Verteiler für die Versorgung von Aktoren und/oder Sensoren mit Anschlüssen für die Aktoren und/oder Sensoren sowie mit einer Elektronik für die Versorgung der Aktoren und/oder Sensoren und die Weiterleitung der Aktoren-Sensoren-Signale bekannt. Dabei ist vorgesehen die Anschlüsse derart viel Pole aufweisen, dass eine Satellitenstruktur aus Verteilern gebildet werden kann, bei welcher an die Anschlüsse eines Verteilers jeweils ein weiterer Satellitenverteiler, der seinerseits mehrere Anschlüsse aufweist, anschließbar ist, wobei der Verteiler als passiver Verteiler ausgebildet ist.

Die Aufgabe der Erfindung besteht darin, einen Busknoten und ein Steuerungssystem bereitzustellen, die eine einfache Anpassung an unterschiedliche Steuerungsaufgaben ermöglichen.

Diese Aufgabe wird gemäß einem ersten Aspekt der Erfindung für einen Busknoten der eingangs genannten Art mit den Merkmalen des Anspruchs 1 gelöst. Hierbei ist vorgesehen, dass die elektronische Schaltung eine dritte Busschnittstelle aufweist, die zur elektrischen Kopplung des übergeordneten Bussystems mit einem weiteren internen Bussystem ausgebildet ist, wobei die elektronische Schaltung für eine separate Ansteuerung der zweiten und der dritten Busschnittstelle ausgebildet ist.

Mit Hilfe der dritten Busschnittstelle kann in einfacher Weise eine zusätzliche Ankopplung einer weiteren Funktionsmodulanordnung an den Busknoten und somit an das übergeordnete Bussysstem erreicht werden. Dabei ist die elektronische Schaltung im Busknoten derart eingerichtet, dass sie eine separate Ansteuerung der beiden Busschnittstellen und somit der an den Busschnittstellen anschließbaren Funktionsmodulanordnungen ermöglicht. Somit stehen die beiden Funktionsmodulanordnungen im Bezug auf das übergeordnete Bussystem jeweils in einer unmittelbaren Signalübertragungsverbindung mit dem übergeordneten Bussystem und der daran ankoppelbaren übergeordneten Steuerungseinrichtung.

Vorteilhafte Weiterbildungen der Erfindung sind Gegenstand der Unteransprüche.

Vorzugsweise ist die elektronische Schaltung für eine unabhängige elektrische Kopplung des übergeordneten Bussystems mit den beiden internen Bussystemen ausgebildet. Hierdurch wird sichergestellt, dass jede Funktionsmodulanordnung über das interne Bussystem unabhängig von einer Signalübertragung der jeweils anderen Funktionsmodulanordnung mit dem übergeordneten Bussystem gemäß den Randbedingen, wie sie im internen Busprotokoll und im übergeordneten Busprotokoll festgelegt sind, kommunizieren kann.

Zweckmäßig ist es, wenn die elektronische Schaltung eine, insbesondere eine einzige, Leiterplatte umfasst, auf der ein Prozessor zur Umsetzung von Signalen zwischen dem übergeordneten Bussystem und den internen Bussystemen sowie die erste, zweite und dritte Busschnittstelle ausgebildet sind. Hierdurch wird eine einfache und kostengünstige Aufbauweise für die elektronische Schaltung gewährleistet. Zudem entfallen bei einer Verwirklichung der elektronischen Schaltung auf einer einzigen Leiterplatte potentiell fehleranfällige elektrische Leiterplattenverbindungen. Der Prozessor, bei dem es sich um einen Mikroprozessor oder um einen Mikrocontroller handeln kann, ist vorzugsweise derart ausgewählt, dass er die drei Busschnittstellen für die drei Bussysteme ansteuern kann. Vorteilhaft ist es, wenn der Prozessor derart ausgebildet ist, dass er sämtliche Verarbeitungsoperationen, die zur Umsetzung der eintreffenden Signale des übergeordneten Bussystems und der beiden internen Bussysteme eingesetzt werden kann, ohne dass bei der wahlweisen Nutzung oder Nichtnutzung der dritten Busschnittstelle Änderungen an der elektronischen Schaltung und/oder der zugehörigen Leiterplatte und/oder der Software für den Prozessor erforderlich sind.

Bei einer Weiterbildung der Erfindung ist vorgesehen, dass der erste Steckverbinder einem ersten Gehäuseteil zugeordnet ist, das die elektronische Schaltung zumindest bereichsweise umschließt. Der erste Gehäuseteil dient somit zur Aufnahme der mechanischen Kräfte, die bei der Herstellung des Steckkontakts zwischen dem übergeordneten Bussystem und dem ersten Steckverbinder sowie auch während des Betriebs des Busknotens auftreten. Ferner kommt dem ersten Gehäuseteil die Aufgabe zu, die elektronische Schaltung zumindest bereichsweise zu umschließen und damit zumindest teilweise abzudecken, um einen Schutz vor Umwelteinflüssen zu gewährleisten.

In weiterer Ausgestaltung der Erfindung ist der zweite Steckverbinder einem zweiten Gehäuseteil zugeordnet. Vorzugsweise durchsetzt der zweite Steckverbinder das zweite Gehäuseteil. Insbesondere ist der zweite Steckverbinder an einer dem ersten Steckverbinder entgegengesetzten Oberfläche des zweiten Gehäuseteils angeordnet, das die elektronische Schaltung zumindest bereichsweise umschließt. Der zweite Gehäuseteil dient in zur Aufnahme der auf den zweiten Steckverbinder einwirkenden Kräfte, sowohl beim Herstellen der Verbindung mit dem internen Bussystem als auch beim Betrieb des Busknotens. Vorzugsweise sind der zweite Gehäuseteil und der zweite Steckverbinder derart aufeinander abgestimmt, dass der Busknoten an eine aus mehreren, längs einer Aufreihungsachse angeordneten, insbesondere quaderförmig oder scheibenförmig geformten, Funktionsmodulen gebildeten Funktionsmodulanordnung aufgesteckt werden kann und mit der Funktionsmodulanordnung eine bauliche Einheit bildet. Besonders bevorzugt sind der erste Gehäuseteil und der zweite Gehäuseteil derart aufeinander abgestimmt, dass die beiden Gehäuseteile die elektronische Schaltung vollständig umschließen und somit in Abhängigkeit vom vorgesehenen Anwendungsfall für den Busknoten vor Umwelteinflüssen wie Feuchtigkeit, Schmutz, elektromagnetischer Strahlung, etc. schützen können. Exemplarisch kann vorgesehen werden, dass der zweite Gehäuseteil in einer ersten Ausführungsform ausschließlich den zweiten Steckverbinder umfasst und somit an dem aus erstem und zweitem Gehäuseteil gebildeten Gehäuse kein dritter Steckverbinder vorgesehen ist. Hierdurch wird eine im Funktionsumfang beschränkte Grundversion des Busknotens gebildet.

Bevorzugt ist die dritte Busschnittstelle elektrisch mit einem dritten Steckverbinder gekoppelt, der am zweiten Gehäuseteil angebracht ist. Somit kann durch Auswechseln des zweiten Gehäuseteils gemäß der ersten Ausführungsform gegen ein Gehäuseteil dieser zweiten Ausführungsform eine Anpassung des Busknotens an unterschiedliche Erfordernisse verwirklicht werden. Vorzugsweise können weitere, unterschiedlich konfigurierte zweite Gehäuseteile vorgesehen werden, die sich durch die Auswahl und/oder Anordnung des dritten Steckverbinders unterscheiden, um eine Kopplung mit unterschiedlichen Stecksystemen für das zweite interne Bussystem zu ermöglichen. Durch die Anordnung des zweiten und des dritten Steckverbinders an dem zweiten Gehäuseteil wird somit eine Ausbaustufe des Busknotens bestimmt, bei der eine elektrische Kopplung des übergeordneten Bussystems mit den beiden internen Bussystemen ermöglicht wird. Bei einer weiteren Ausführungsform des Busknotens können noch zusätzliche Busschnittstellen und zugehörige Steckverbinder für den Busknoten vorgesehen werden, um weitere interne Bussysteme mit dem übergeordneten Bussystem elektrisch koppeln zu können.

Zweckmäßig ist es, wenn zwischen der dritten Busschnittstelle und dem dritten Steckverbinder ausschließlich elektrische, vorzugsweise lösbar an der dritten Busschnittstelle anbringbare, Verbindungen ausgebildet sind. Bei den elektrischen Verbindungen zwischen der dritten Busschnittstelle und dem dritten Steckverbinder handelt es sich vorzugsweise um eine Anordnung von Kabeln, insbesondere um ein Flachbandkabel oder eine gedruckte, insbesondere flexible und als Flexleiter bezeichnete, gedruckte Leiterplatte. Vorzugsweise sind die elektrischen Verbindungen an einem dem dritten Steckverbinder abgewandten Endbereich mit einem weiteren Steckverbinder zur elektrischen Kopplung mit der dritten Busschnittstelle vorgesehen. Bei Verwendung eines Flachbandkabels oder eines Flexleiters kann auch ein Einstecken des Endereichs der elektrischen Verbindungen in eine geeignet ausgebildete Steckbuchse auf der Leiterplatte der elektronischen Schaltung, beispielsweise in einen Schneidklemmverbinder oder einen ZIF- bzw. LIF-Verbinder (Zero-Insertion-Force Verbinder / Low-Insertion-Force-Verbinder) vorgesehen werden. Vorzugsweise sind die elektrischen Verbindungen zwischen der dritten Busschnittstelle und dem dritten Steckverbinder frei von elektrischen und/oder elektronischen Bauelementen, um eine einfache Aufbauweise dieser elektrischen Verbindungen zu gewährleisten.

Bei einer vorteilhaften Weiterbildung der Erfindung ist vorgesehen, dass der dritte Steckverbinder quer zum ersten und/oder zum zweiten Steckverbinder ausgerichtet ist. Hierdurch wird bei Anbringung des Busknotens an einer Funktionsmodulanordnung unter Einsatz des zweiten Steckverbinders sichergestellt, dass der dritte Steckverbinder frei zugänglich bleibt und für die Ankopplung eines weiteren Funktionsmoduls oder einer aus mehreren Funktionsmodulen gebildeten Funktionsmodulanordnung genutzt werden kann.

Vorzugsweise weisen die beiden internen Bussysteme das gleiche Busprotokoll, beispielsweise I/O-Link, auf.

Die Aufgabe der Erfindung wird gemäß einem zweiten Erfindungsaspekt durch ein Steuerungssystem nach Anspruch 10 gelöst. Dieses umfasst eine übergeordnete Steuerungseinrichtung, insbesondere eine speicherprogrammierbare Steuerung, die für einen Datenaustausch mit einem Busknoten über ein übergeordnetes Bussystem, insbesondere ein Feldbussystem, ausgebildet ist, sowie einen Busteilnehmer, der einen erfindungsgemäßen Busknoten sowie zwei getrennt voneinander ansteuerbare Funktionsmodulanordnungen umfasst, wobei die Funktionsmodulanordnungen jeweils wenigstens ein als Eingangsmodul zur Verarbeitung externer Sensorsignale und/oder als Ausgangsmodul zur elektrischen Ansteuerung eines Aktors und/oder als Ventilmodul zur Steuerung einer Fluidströmung ausgebildetes Funktionsmodul umfassen, wobei jede der Funktionsmodulanordnungen über ein internes Bussystem mit dem Busknoten verbunden ist, um Signale von der übergeordneten Steuerungseinrichtung an die Funktionsmodule sowie Signale der Funktionsmodule an die übergeordnete Steuerungseinrichtung zu übertragen und wobei der Busknoten für eine separate, insbesondere unabhängige, Kommunikation der übergeordneten Steuerungseinrichtung mit den Funktionsmodulanordnungen ausgebildet ist. Das Steuerungssystem kann beispielsweise zur Steuerung einer Produktionsmaschine genutzt werden, die eine Vielzahl von Sensoren und Aktoren umfasst, wobei die Sensoren und Aktoren über elektrische und/oder fluidische Verbindungsleitungen mit zugeordneten Funktionsmodulen verbunden sind und von diesen angesteuert werden und/oder mit diesen im Datenaustausch stehen.

Eine vorteilhafte Ausführungsform der Erfindung ist in der Zeichnung dargestellt. Hierbei zeigt:
- Figur 1: eine schematische Explosionsdarstellung eines Busknotens, der zur wahlweisen Kopplung eines übergeordneten Bussystems mit einem oder zwei internen Bussystemen ausgebildet ist,
- Figur 2: eine schematische Darstellung eines Steuerungssystems, bei dem der Busknoten gemäß der Figur 1 eingesetzt wird und
- Figur 3: eine zweite Ausführungsform eines zweiten Gehäuseteils für den Busknoten gemäß den Figuren 1 und 2.

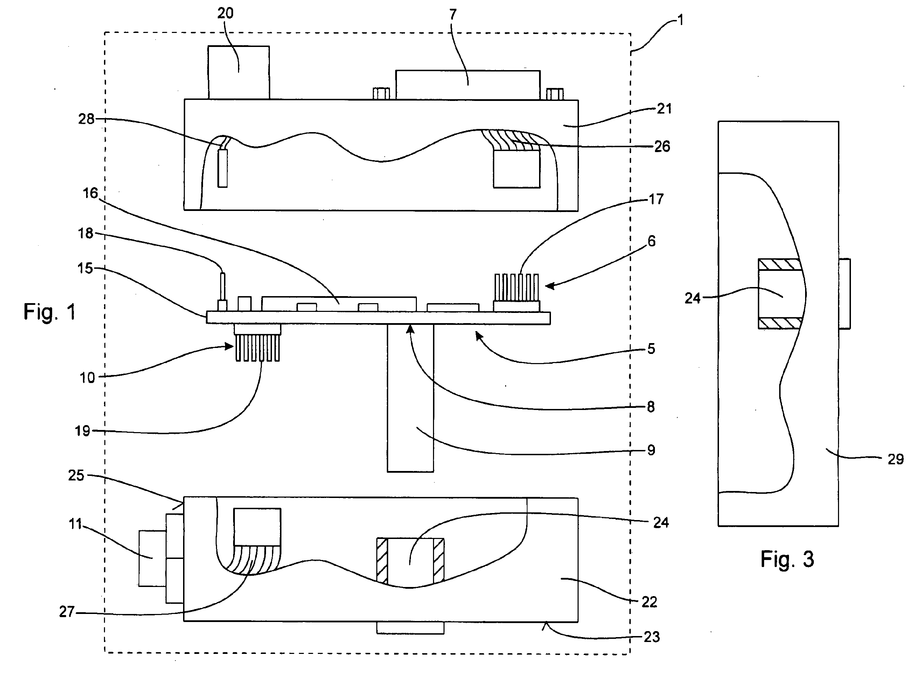

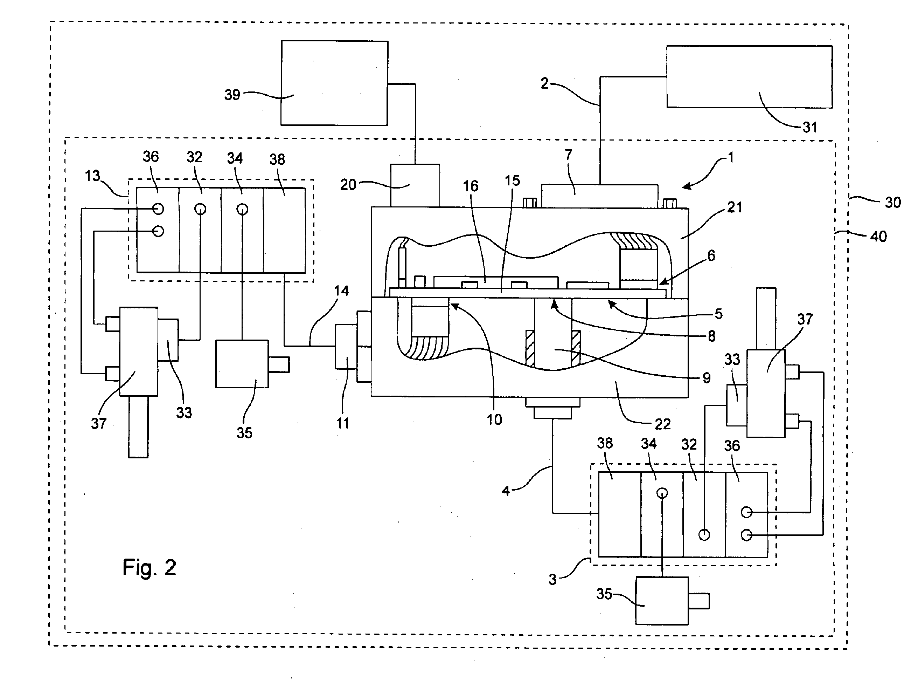

In den Figuren 1 und 2 ist ein Busknoten 1 dargestellt, der zur elektrischen Kopplung eines in der Figur 2 näher dargestellten übergeordneten Bussystems 2, insbesondere eines Feldbussystems, mit wenigstens einem zur Ansteuerung einer Funktionsmodulanordnung 3 ausgebildeten internen Bussystem 4, 14 vorgesehen ist.

Wie aus den Figuren 1 und 2 hervorgeht, umfasst der Busknoten 1 eine elektronische Schaltung 5 zur Umsetzung von Signalen, insbesondere Steuersignalen und/oder Sensorsignalen, zwischen einem Busprotokoll des übergeordneten Bussystems 2 und einem Busprotokoll des internen Bussystems 4, 14. Die elektronische Schaltung 5 weist eine erste Busschnittstelle 6 mit zugeordnetem ersten Steckverbinder 7 zur Kopplung mit dem übergeordneten Bussystem, eine zweite Busschnittstelle 8 mit zugeordnetem zweiten Steckverbinder 9 sowie eine dritte Busschnittstelle 10 mit zugeordnetem dritten Steckverbinder 11 auf. Die zweite Busschnittstelle 8 ist zur Kopplung mit dem internen Bussystem 4 vorgesehen. Die dritte Busschnittstelle 10 ist zur Kopplung des übergeordneten Bussystems 2 mit einer weiteren Funktionsmodulanordnung 13 über ein weiteres internes Bussystem 14 vorgesehen.

Die elektronische Schaltung 5 ist für eine separate Ansteuerung der zweiten Busschnittstelle 8 und der dritten Busschnittstelle 10 ausgebildet. Vorzugsweise erfolgt eine Buskommunikation zwischen dem übergeordneten Bussystem 2 mit den beiden internen Bussystemen 4, 14 unabhängig voneinander, so dass die Funktionsmodulanordnungen 3, 13 über die internen Bussysteme 4, 14 einen Datentaustausch untereinander oder mit einer in der Figur 2 dargestellten Steuerungseinrichtung 31, bei der es sich exemplarisch um eine speicherprogrammierbare Steuerung (SPS) handelt, im Busprotokoll des übergeordneten Bussystems 2 zu unterschiedlichen Zeitpunkten und mit voneinander abweichenden Dateninhalten vornehmen können.

Wie aus den Figuren 1 und 2 hervorgeht, ist die elektronische Schaltung 5 im Busknoten exemplarisch auf einer einzigen Leiterplatte 15 verwirklicht. Die Leiterplatte 15 kann beispielsweise als mehrlagige gedruckte Schaltung aufgebaut sein und ist mit einem Prozessor 16 bestückt, der zur Umsetzung von Signalen zwischen dem übergeordneten Bussystem 2 und den internen Bussystemen 4, 14 und dementsprechend zur Ansteuerung der ersten, zweiten und dritten Busschnittstelle 6, 8, 10 ausgebildet ist. Der Prozessor 16 kann insbesondere als Mikroprozessor oder Mikrocontroller ausgebildet sein.

Ferner sind auf der Leiterplatte 15 mehrere exemplarisch als Pfostensteckverbinder ausgeführte Kontaktleisten 17, 18, 19 angeordnet, die jeweils für eine lösbare elektrische Verbindung mit dem ersten Steckverbinder 7, mit dem dritten Steckverbinder 11 und mit einem elektrischen Versorgungsanschluss 20 ausgebildet sind. Der zweite Steckverbinder 9 ist exemplarisch direkt auf der Leiterplatte 15 angeordnet. Beispielhaft handelt es sich um einen mehrpoligen Rundsteckverbinder, der mehrere nicht näher dargestellte, mit der Leiterplatte 15 verlötete Anschlussbeine aufweist.

Wie aus der Explosionsdarstellung der Figur 1 hervorgeht, sind exemplarisch der erste Steckverbinder 7 und der Versorgungsanschluss 20 an einem ersten Gehäuseteil 21 angebracht. Der erste Steckverbinder 7 kann beispielsweise in der Art eines D-Sub-Steckverbinders ausgebildet sein. Der Versorgungsanschluss 20 kann als mehrpoliger Rundsteckverbinder ausgebildet sein. Der erste Gehäuseteil 21 ist exemplarisch halbschalenförmig ausgebildet und kann die elektrische Schaltung 5 zumindest bereichsweise umschließen.

Der zweite Steckverbinder 9 ist derart auf einen zweiten Gehäuseteil 22 angepasst, dass er bei Montage des zweiten Gehäuseteils 22 an den ersten Gehäuseteil 21 den zweiten Gehäuseteil 22 durchsetzt und über dessen Außenoberfläche 23 hinausragt. Für eine zuverlässige mechanische Abstützung des zweiten Steckverbinders 9 im zweiten Gehäuseteil 22 gegenüber von außen, beispielsweise beim Herstellen einer Steckverbindung mit dem internen Bussystem 14, auftretenden Kräften ist exemplarisch ein Rohrstutzen 24 im zweiten Gehäuseteil 22 ausgebildet, der endseitig ebenfalls über die außenoberfläche 23 hinausragt. Vorzugsweise sind der erste Gehäuseteil 21 und der zweite Gehäuseteil 22 als Kunststoffspritzgussteile ausgebildet.

Am der in Figur 1 dargestellten Ausführungsform des zweiten Gehäuseteils 22 ist exemplarisch auch der dritte Steckverbinder 11 angebracht, der den zweiten Gehäuseteil 22 an einer Seitenoberfläche 25 durchsetzt. Vorzugsweise ist der dritte Steckverbinder 11 fest mit dem zweiten Gehäuseteil 22 verbunden, insbesondere verschraubt.

Für eine elektrische Verbindung des ersten und des dritten Steckverbinders 7, 11 sowie des Versorgungsanschlusses 20 mit der elektronischen Schaltung 5 sind jeweils mehradrige, exemplarisch als Flachbandkabel mit endseitig angebrachten Kabelsteckern ausgebildete, Kabelverbindungen 26, 27, 28 vorgesehen, die auf die jeweils zugehörigen Kontaktleisten 17, 18 ,19 aufgesteckt werden können, wie dies in der Figur 2 dargestellt ist. Vorzugsweise sind die Kabelverbindungen 26, 27, 28 rein elektrisch ausgeführt, umfassen also keine über den elektrischen Leiter, also beispielsweise einen Kupferdraht oder eine Kupferlitze hinaus, keine elektrischen oder elektronischen Bauelemente und können somit kostengünstig hergestellt werden. Besonders vorteilhaft ist es, wenn die Kabelverbindungen 26, 27, 28 derart ausgebildet sind, dass sie beim Montieren des ersten Gehäuseteils 21 und des zweiten Gehäuseteils 22 an die elektronische Schaltung 5 unmittelbar in elektromechanische Verbindung mit den jeweiligen Kontaktleisten 17, 18, 19 treten.

Eine in der Figur 3 dargestellte alternative Ausführungsform des zweiten Gehäuseteils 29 unterscheidet sich von der in Figur 1 dargestellten Ausführungsform des zweiten Gehäuseteils 22 dadurch, dass kein dritter Steckverbinder 11 vorgesehen ist, so dass dementsprechend nur ein einziges internes Bussystem 4 an einen nicht näher dargestellten, mit diesem zweiten Gehäuseteil 29 ausgestatteten Busknoten angeschlossen werden kann. Somit kann der Busknoten 1 je nach Auswahl des zweiten Gehäuseteils 22, 29 in einfacher Weise an die Anforderungen des geplanten Einsatzes angepasst werden.

Das in der Figur 2 dargestellte Steuerungssystem 30 umfasst eine exemplarisch als speicherprogrammierbare Steuerung (SPS) ausgebildete übergeordnete Steuerungseinrichtung 31, die zur Bereitstellung von Steuersignalen an die Funktionsmodulanordnungen 3, 13 und zur Verarbeitung von Sensorsignalen, die von den Funktionsmodulanordnungen 3, 13 bereitgestellt werden, ausgebildet ist. Für einen Datenaustausch zwischen der übergeordneten Steuerungseinrichtung 31 und den Funktionsmodulanordnungen 3, 13 ist eine Kombination eines übergeordneten Bussystems 2, insbesondere eines Feldbussystems mit internen Bussystemen 4, 14 vorgesehen. Das übergeordnete Bussystem 2 ist für eine Vielzahl von nicht näher dargestellten Busteilnehmern ausgebildet und wird gemäß einem für diese Aufgabenstellung ausgebildeten übergeordneten Busprotokoll betrieben. Die internen Bussysteme 4, 14 sind jeweils für eine geringe Anzahl von internen Busteilnehmern, vorliegend den Funktionsmodulanordnungen 3, 13 ausgebildet und werden jeweils gemäß relativ einfach strukturierten internen Busprotokollen betrieben.

Für eine Umsetzung der Signale des übergeordneten Busprotokolls in Signale der internen Busprotokolle und umgekehrt ist der Busknoten 1 vorgesehen, der zusammen mit den exemplarisch zwei, getrennt voneinander ansteuerbaren Funktionsmodulanordnungen 3, 13 im übergeordneten Busprotokoll einen von der übergeordneten Steuerungseinrichtung 31 adressierbaren Busteilnehmer 39 darstellt.

Die Funktionsmodulanordnungen 3, 13 umfassen jeweils exemplarisch ein Eingangsmodul 32 zur Verarbeitung von Signalen eines externen Sensors 33, ein Ausgangsmodul 34 zur elektrischen Ansteuerung eines Aktors 35, ein Ventilmodul 36 zur Ansteuerung eines als fluidisch betreibbarer Zylinder ausgebildeten pneumatischen Stellglieds 37 sowie ein internes Busmodul 38 für die elektrische Kopplung mit dem jeweiligen internen Bussystem 4, 14.

Jede der Funktionsmodulanordnungen 3, 13 ist über das jeweilige interne Bussystem 4, 14 mit dem Busknoten 1 verbunden, um Signale von der übergeordneten Steuerungseinrichtung 31 an die Funktionsmodule 32, 34, 26, 38 sowie Signale der Funktionsmodule 32, 24, 26, 38 an die übergeordnete Steuerungseinrichtung 31 zu übertragen. Dabei ist der Busknoten 1 für eine separate, insbesondere unabhängige, Kommunikation der übergeordneten Steuerungseinrichtung 31 mit den Funktionsmodulanordnungen 3, 13 ausgebildet.

Am Versorgungsanschluss 20 ist eine Spannungsquelle 39 angeschlossen, die die elektrische Energie zum Betreiben des Busknotens 1 sowie der beiden Funktionsmodulanordnungen 3, 13 bereitstellt.

## Patentansprüche

1. Busknoten zur elektrischen Kopplung eines übergeordneten Bussystems (2), insbesondere eines Feldbussystems, mit einem zur Ansteuerung einer Funktionsmodulanordnung (3, 13) ausgebildeten internen Bussystem (4); mit einer elektronischen Schaltung (5) zur Umsetzung von Signalen, insbesondere Steuersignalen und/oder Sensorsignalen, zwischen einem Busprotokoll des übergeordneten Bussystems (2) und einem Busprotokoll des internen Bussystems (4), wobei die elektronische Schaltung (5) eine erste Busschnittstelle (6) mit zugeordnetem ersten Steckverbinder (7) zur Kopplung mit dem übergeordneten Bussystem (2) und eine zweite Busschnittstelle (8) mit zugeordnetem zweiten Steckverbinder (9) zur Kopplung mit dem internen Bussystem (4) aufweist, **dadurch gekennzeichnet, dass** die elektronische Schaltung (5) eine dritte Busschnittstelle (10) aufweist, die zur elektrischen Kopplung des übergeordneten Bussystems (2) mit einem weiteren internen Bussystem (14) ausgebildet ist, wobei die elektronische Schaltung (5) für eine separate Ansteuerung der zweiten und der dritten Busschnittstelle (8, 10) ausgebildet ist.

2. Busknoten nach Anspruch 1, **dadurch gekennzeichnet, dass** die elektronische Schaltung (5) für eine unabhängige elektrische Kopplung des übergeordneten Bussystems (2) mit den beiden internen Bussystemen (4, 14) ausgebildet ist.

3. Busknoten nach Anspruch 1 oder 2, **dadurch gekennzeichnet, dass** die elektronische Schaltung (5) eine, insbesondere eine einzige, Leiterplatte (15) umfasst, auf der ein Prozessor (16) zur Umsetzung von Signalen zwischen dem übergeordneten Bussystem (2) und den internen Bussystemen (4, 14) sowie die erste, zweite und dritte Busschnittstelle (6, 8, 10) ausgebildet sind.

4. Busknoten nach Anspruch 1, 2 oder 3, **dadurch gekennzeichnet, dass** der erste Steckverbinder (7) einem ersten Gehäuseteil (21) zugeordnet ist, das die elektronische Schaltung (5) zumindest bereichsweise umschließt.

5. Busknoten nach Anspruch 4, **dadurch gekennzeichnet, dass** der zweite Steckverbinder (9) einem zweiten Gehäuseteil (22; 29) zugeordnet ist, das die elektronische Schaltung (5) zumindest bereichsweise umschließt.

6. Busknoten nach Anspruch 5, **dadurch gekennzeichnet, dass** die dritte Busschnittstelle (10) elektrisch mit einem dritten Steckverbinder (11) gekoppelt ist, der am zweiten Gehäuseteil (22) angebracht ist.

7. Busknoten nach Anspruch 6, **dadurch gekennzeichnet, dass** zwischen der dritten Busschnittstelle (10) und dem dritten Steckverbinder (11) ausschließlich elektrische, vorzugsweise lösbar an der dritten Busschnittstelle (10) anbringbare, Verbindungen (27) ausgebildet sind.

8. Busknoten nach Anspruch 5, 6 oder 7, **dadurch gekennzeichnet, dass** der dritte Steckverbinder (11) quer zum ersten und/oder zum zweiten Steckverbinder (7, 9) ausgerichtet ist.

9. Busknoten nach eine der vorhergehenden Ansprüche, **dadurch gekennzeichnet, dass** die beiden internen Bussysteme (4, 14) das gleiche Busprotokoll aufweisen.

10. Steuerungssystem mit einer übergeordneten Steuerungseinrichtung (31), insbesondere einer speicherprogrammierbaren Steuerung, die für einen Datenaustausch mit einem Busknoten (1) nach einem der vorhergehenden Ansprüche über ein übergeordnetes Bussystem (2), insbesondere ein Feldbussystem, ausgebildet ist, sowie mit einem Busteilnehmer (40), der den Busknoten (1) sowie zwei getrennt voneinander ansteuerbare Funktionsmodulanordnungen (3, 13) umfasst, wobei die Funktionsmodulanordnungen (3, 13) jeweils wenigstens ein als Eingangsmodul (32) zur Verarbeitung externer Sensorsignale und/oder als Ausgangsmodul (34) zur elektrischen Ansteuerung eines Aktors (35) und/oder als Ventilmodul (36) zur Steuerung einer Fluidströmung ausgebildetes Funktionsmodul umfassen, wobei jeder der Funktionsmodulanordnungen (3, 13) über ein internes Bussystem (4, 14) mit dem Busknoten (1) verbunden ist, um Signale von der übergeordneten Steuerungseinrichtung (31) an die Funktionsmodule (3, 13) sowie Signale der Funktionsmodule (3, 13) an die übergeordnete Steuerungseinrichtung (31) zu übertragen und wobei der Busknoten (1) für eine separate, insbesondere unabhängige, Kommunikation der übergeordneten Steuerungseinrichtung (31) mit den Funktionsmodulanordnungen (3, 13) ausgebildet ist.

## Claims

1. Bus node for the electrical connection of a higher-level bus system (2), in particular a field bus system, with an internal bus system (4) designed for the control of a function module assembly (3, 13); with an electronic circuit (5) for the transfer of signals, in particular control signals and/or sensor signals, between a bus protocol of the higher-level bus system (2) and a bus protocol of the internal bus system (4), wherein the electronic circuit (5) has a first bus interface (6) with assigned first plug connector (7) for connection with the higher-level bus system (2), and a second bus interface (8) with assigned second plug connector (9) for connection with the internal bus system (4), **characterised in that** the electronic circuit (5) has a third bus interface (10) which is designed for the electrical connection of the higher-level bus system (2) to a further internal bus system (14), wherein the electronic circuit (5) is designed for separate control of the second and third bus interfaces (8, 10).

2. Bus node according to claim 1, **characterised in that** the electronic circuit (5) is designed for independent electrical connection of the higher-level bus system (2) to the two internal bus systems (4, 14).

3. Bus node according to claim 1 or 2, **characterised in that** the electronic circuit (5) includes a printed circuit board (15), in particular a single printed circuit board, on which are formed a processor (16) for the transfer of signals between the higher-level bus system (2) and the internal bus systems (4, 14), together with the first, second and third bus interfaces (6, 8, 10).

4. Bus node according to claim 1, 2 or 3, **characterised in that** the first plug connector (7) is assigned a first casing part (21) which encompasses the electronic circuit (5) at least in certain areas.

5. Bus node according to claim 4, **characterised in that** the second plug connector (9) is assigned a second casing part (22; 29) which encompasses the electronic circuit (5) at least in certain areas.

6. Bus node according to claim 5, **characterised in that** the third bus interface (10) is connected electrically to a third plug connector (11) which is attached to the second casing part (22).

7. Bus node according to claim 6, **characterised in that** connections (27), solely electrical and preferably releasably attachable to the third bus interface (10), are formed between the third bus interface (10) and the third plug connector (11).

8. Bus node according to claim 5, 6 or 7, **characterised in that** the third plug connector (11) is aligned transversely to the first and/or second plug connector(s) (7, 9).

9. Bus node according to any of the preceding claims, **characterised in that** the two internal bus systems (4, 14) have the same bus protocol.

10. Control system with a higher-level control unit (31), in particular a programmable control system, which is designed for data exchange with a bus node (1) according to any of the preceding claims via a higher-level bus system (2), in particular a field bus system, also with a bus user (40) including the bus node (1) plus two function module assemblies (3, 13) which may be controlled separately from one another, wherein each of the function module assemblies (3, 13) includes at least one function module designed as input module (32) for processing external sensor signals and/or as output module (34) for the electrical activation of an actuator (35) and/or as valve module (36) for the control of a fluid flow, wherein each of the function module assemblies (3, 13) is connected to the bus node (1) via an internal bus system (4, 14) in order to transmit signals from the higher-level control unit (31) to the function modules (3, 13) and also signals from the function modules (3, 13) to the higher-level control unit (31), and wherein the bus node (1) is designed for separate, in particular independent, communication of the higher-level control unit (31) with the function module assemblies (3, 13).

## Revendications

1. Noeud de bus servant à coupler de manière électrique un système de bus supérieur (2), en particulier un système de bus de terrain, comprenant un système de bus interne (4) réalisé aux fins de la commande d'un ensemble de modules fonctionnels (3, 13), comprenant un système de commutation (5) électronique servant à la conversion de signaux, en particulier de signaux de commande et/ou de signaux de capteur, entre un protocole de bus du système de bus supérieur (2) et un protocole de bus du système de bus interne (4), sachant que le système de commutation électronique (5) présente une première interface de bus (6) dotée d'un premier connecteur enfichable (7) associé servant au couplage avec le système de bus supérieur (2) et une deuxième interface de bus (8) dotée d'un deuxième connecteur enfichable (9) associé servant au couplage avec le système de bus interne (4), **caractérisé en ce que** le système de commutation (5) électronique présente une troisième interface de bus (10), qui est réalisée aux fins du couplage électrique du système de bus supérieur (2) à un autre système de bus interne (14), sachant que le système de commutation électronique (5) est réalisé pour commander séparément la deuxième interface de bus et la troisième interface de bus (8, 10).

2. Noeud de bus selon la revendication 1, **caractérisé en ce que** le système de commutation électronique (5) est réalisé pour un couplage électrique indépendant du système de bus supérieur (2) aux deux systèmes de bus internes (4, 14).

3. Noeud de bus selon la revendication 1 ou 2, **caractérisé en ce que** le système de commutation électronique (5) comprend une carte de circuit imprimé (15), en particulier une unique carte de circuit imprimé, sur laquelle sont réalisés un processeur (16) servant à la conversion de signaux entre le système de bus supérieur (2) et les systèmes de bus internes (4, 14), ainsi que les première, deuxième et troisième interfaces de bus (6, 8, 10).

4. Noeud de bus selon la revendication 1, 2 ou 3, **caractérisé en ce que** le premier connecteur enfichable (7) est associé à une première partie de boîtier (21), qui renferme au moins par endroits le système de commutation (5) électronique.

5. Noeud de bus selon la revendication 4, **caractérisé en ce que** le deuxième connecteur enfichable (9) est associé à une deuxième partie de boîtier (22 ; 29), qui renferme au moins par endroits le système de commutation électronique (5).

6. Noeud de bus selon la revendication 5, **caractérisé en ce que** la troisième interface de bus (10) est couplée de manière électrique à un troisième connecteur enfichable (11), qui est installé au niveau de la deuxième partie de boîtier (22).

7. Noeud de bus selon la revendication 6, **caractérisé en ce que** des liaisons (27) électriques, de préférence pouvant être installées de manière amovible au niveau de la troisième interface de bus (10) sont exclusivement réalisées entre la troisième interface de bus (10) et le troisième connecteur enfichable (11).

8. Noeud de bus selon la revendication 5, 6 ou 7, **caractérisé en ce que** le troisième connecteur enfichable (11) est orienté de manière transversale par rapport au premier connecteur enfichable et/ou au deuxième connecteur enfichable (7, 9).

9. Noeud de bus selon l'une quelconque des revendications précédentes, **caractérisé en ce que** les deux systèmes de bus internes (4, 14) présentent le même protocole de bus.

10. Système de commande comprenant un dispositif de commande supérieur (31), en particulier comprenant une commande par programme enregistré, qui est réalisé pour échanger des données avec un noeud de bus (1) selon l'une quelconque des revendications précédentes par l'intermédiaire d'un système de bus supérieur (2), en particulier un système de bus de terrain, comprenant également un abonné de bus (40), qui comprend le noeud de bus (1) ainsi que deux ensembles de modules fonctionnels (3, 13) pouvant être commandés séparément l'un de l'autre, sachant que les ensembles de modules fonctionnels (3, 13) comprennent respectivement au moins un module fonctionnel réalisé sous la forme d'un module d'entrée (32) servant à traiter des signaux externes de capteur et/ou sous la forme d'un module de sortie (34) servant à commander de manière électrique un actionneur (35) et/ou sous la forme d'un module de soupape (36) servant à commander un écoulement de fluide, sachant que chacun des ensembles de modules fonctionnels (3, 13) est relié au noeud de bus (1) par l'intermédiaire d'un système de bus interne (4, 14) afin de transférer des signaux en provenance du dispositif de commande supérieur (31) aux modules fonctionnels (3, 13) ainsi que des signaux des modules fonctionnels (3, 13) au dispositif de commande supérieur (31) et sachant que le noeud de bus (1) est réalisé afin de faire communiquer de manière séparée, en particulier de manière indépendante, le dispositif de commande supérieur (31) avec les ensembles de modules fonctionnels (3, 13).
